# EUROPEAN PATENT APPLICATION

(11) **EP 4 523 823 A1**
(43) Date of publication of application: **19.03.2025**
(21) Application number: 22941597.1
(22) Date of filing: 10.05.2022
(51) Int. Cl.: B23B 31/117

(54) **SPINDLE DEVICE, MACHINE TOOL HAVING SPINDLE DEVICE MOUNTED THEREON, AND BALANCING MACHINE**

(71) Applicant: MCK Co., Ltd., Okazaki-shi, Aichi 444-2134 (JP)
(72) Inventor: KANEMATSU Minoru, Okazaki-shi Aichi 444-2134 (JP)
(74) Representative: Cabinet Beau de Loménie
(86) International application number: PCT/JP2022/019768
(87) International publication number: WO 2023/218515

(57) **Abstract**

[Object] To provide a spindle device capable of clamping two positions at the inside and the outside of a multifunctional holder with one driving means, a machine tool having the spindle device mounted thereon, and the like.

[Solution Means] In a spindle device to be used by mounting a holder having a first clamped part and a second clamped part arranged doubly on a spindle leading end, a first draw bar 8 and a second draw bar 9 overlap each other and are arranged in series in a spindle cylinder. As the first draw bar 8 is pushed and advanced by a striking metal 17, the first draw bar 8 is advanced against a biasing force of a first disc spring assembly 10 and a first clamping mechanism is released, and along with this, the second draw bar 7 is also advanced against a biasing force of a second disc spring assembly 11, and a second clamping mechanism is also released. As the striking metal 17 is retreated, the first and second clamping mechanisms of the first and second draw bars 8 and 9 are activated by the biasing forces of the first and second disc spring assemblies 10 and 11.

## Description

### Technical Field

The present invention relates to a spindle device, and a machine tool and a balancing machine having a spindle device mounted thereon, and the like, to be used by mounting a holder for a tool or a workpiece to a spindle leading end, where the holder has a first clamped part and a second clamped part arranged doubly at the inside and the outside on a base part side.

### Background Art

As a holder, a multifunctional holder mounted on a spindle of a machine tool to which both a tool and a workpiece can be attached has been developed by the applicant. A holder holding mechanism to be used when such a holder is mounted on the spindle, a spindle device having such a holder holding mechanism, and the like have also been developed simultaneously with the holder. Patent Literature 1 is presented as a prior art in which these techniques are disclosed. The spindle device of Patent Literature 1 has a unique clamp structure for mounting such a multifunctional holder. Specifically, for example, as illustrated in FIG. 2 of Patent Literature 1, a configuration including an outer gripping mechanism (including an outer draw bar 85, outer balls 92a, and the like) for clamping (gripping) the holder itself and an inner gripping mechanism (including an inner draw bar 84, inner balls 92b, and the like) for clamping a head of a movable pull stud for opening and closing a chuck mechanism of the holder is adopted. That is, it is a mechanism for clamping a multifunctional holder having double clamped parts at the inside and the outside. Further, the outer draw bar 85 and the inner draw bar 84 are caused to separately advance and retreat by two cylinder devices (double pushing and pulling mechanism 9a) arranged at an upper portion of the spindle to perform a clamping operation.

### Citation List

### Patent Literature

Patent Literature 1: Japanese Unexamined Patent Application Publication No. 2010-284768

### Summary of Invention

### Technical Problem

However, arranging the two cylinder devices separately on the spindle device in order to clamp the two clamped parts as described above increases the size and the weight of the spindle device, and increases the cost since a plurality of cylinder devices are required. In addition, it is necessary to control the operations of the two cylinder devices, and this is troublesome in terms of operation. This is also disadvantageous in terms of maintenance.

Therefore, for example, there has been a demand for a mechanism that clamps the holder as described above at two inside and outside positions by using only one pushing means such as a cylinder device.

In view of such a problem, a main object of the present invention is to provide a spindle device, and a machine tool and a balancing machine having a spindle device mounted thereon, and the like that can clamp two inside and outside positions of a multifunctional holder by driving one pushing means.

### Solution to Problem

In order to solve the above problem, a first means is a spindle device to be used by mounting a holder for a tool or a workpiece on a spindle leading end, where the holder has a first clamped part and a second clamped part arranged doubly at the inside and the outside on a base part side of the holder, the spindle device including: a first draw bar having a first clamping mechanism for clamping the first clamped part of the holder on a front end side; and a second draw bar having a second clamping mechanism for clamping the second clamped part of the holder on the front end side, wherein the first draw bar and the second draw bar are arranged in series in the spindle cylinder and are arranged to be capable of advancing and retreating, the first draw bar is advanced against a biasing force of a first biasing means by being pressed in an advancing direction by a pushing means, the second draw bar is advanced against a biasing force of a second biasing means by being directly or indirectly pushed by the first draw bar along with the advance of the first draw bar, and when the first draw bar advanced by the pushing means is at a predetermined advanced position, the first clamping mechanism is released, the second clamping mechanism of the second draw bar pushed by the first draw bar is also released, and the first draw bar at the predetermined advanced position and the second draw bar are respectively retreated toward the spindle cylinder base part by the biasing forces of the first biasing means and the second biasing means along with the release of the pressing force of the pushing means, resulting in activation of the first clamping mechanism of the first draw bar and the second clamping mechanism of the second draw bar.

Accordingly, the first clamping mechanism and the second clamping mechanism can be released only by being pushed by the pushing means. In addition, by retracting the pushing means, the first clamping mechanism and the second clamping mechanism can be activated only by the action of the biasing forces of the first biasing means and the second biasing means, the structure for clamping and unclamping the two clamped parts of the holder is simplified, and this contributes to downsizing and cost reduction of the spindle device.

The "first draw bar" includes a first clamping mechanism for clamping the first clamped part of the holder on a front end side. The front end side is the spindle leading end side. The arranged position of the first clamped part of the holder is determined in relation to the second clamped part, and may be at the inside or the outside.

The "second draw bar" includes a second clamping mechanism for clamping the second clamped part of the holder on a front end side. The second draw bar is in a relationship of being directly or indirectly pushed by the first draw bar along with the advance of the first draw bar. The first draw bar and the second draw bar are arranged in series, and may partially overlap.

The "pushing means" preferably includes, for example, a pressing member such as a ram (piston) using a hydraulic cylinder device, a pneumatic cylinder device, a motor device, or the like as a drive source. The pushing means (pressing member) may or may not be connected to the first draw bar. When the pushing means is not connected, the pushing means does not become a load when the spindle cylinder rotates because the pushing means is in contact just for pushing.

When the pushing means presses the first draw bar to advance the first draw bar, the "first biasing means" is compressed along with the advance of the first draw bar and has a biasing force inside. When the pressing force from the pushing means is released, the first draw bar is retreated toward the spindle cylinder base part by the biasing force. The first biasing means preferably already has a certain degree of biasing force inside from the beginning, and is preferably configured so that the biasing force constantly pushes the first draw bar toward the spindle cylinder base part.

When the first draw bar is advanced by being pushed by the pushing means, and along with this, the second draw bar is also advanced, the "second biasing means" is compressed by the second draw bar and has a biasing force inside. When the pressing force from the pushing means is released, the second draw bar is retreated toward the spindle cylinder base part by the biasing force. The second biasing means preferably already has a certain degree of biasing force inside from the beginning, and is preferably configured so that the biasing force pushes the second draw bar toward the spindle cylinder base part.

The first and second biasing means are preferably, for example, coil springs, disc springs, or leaf springs when they are spring devices. A pneumatic cylinder device or a hydraulic cylinder device may be used.

The "clamped part" needs to have a shape that can be clamped (gripped) by a clamping mechanism. The clamped part preferably has, for example, a protruding part or a shape into which a member on the clamping side is fitted. This is because the clamped part accordingly interferes with the clamping mechanism to prevent the holder from moving in a taking-out direction.

The "clamping mechanism" preferably has a structure having an interference body that advances and retreats in, for example, a radial direction of the spindle with respect to the clamped part. Then, the interference body preferably sinks into and comes out from a passage through which the clamped part is inserted and clamps the clamped part. The shape of the interference body is preferably, for example, a ball shape, a cylindrical shape, or a barrel shape. Alternatively, the interference body may swing around a shaft such as a collet to advance and retreat in the radial direction of the spindle.

Since "the second draw bar is directly or indirectly pushed by the first draw bar," the first draw bar may come into contact with and push the second draw bar, or may push the second draw bar via other members.

The "holder" has a first clamped part and a second clamped part arranged doubly at the inside and the outside on the base part side of the holder. The holder is preferably a highly versatile multifunctional holder that can be used for both a tool and a workpiece. The holder may be a holder specialized for, for example, a tool although it includes the first clamped part and the second clamped part. When there are two clamped parts of the first clamped part and the second clamped part, the tensile force of the holder is improved, and this is particularly suitable for cutting with a high load. In this case, the holder functions not as a multifunctional holder but as a tool holder.

In the case of a multifunctional holder, the holder can be used as a holder for a tool by chucking and mounting, for example, various machining tools such as a milling cutter, a drill, an end mill, a cutting tool, and a reamer prepared in an ATC (automatic tool change) of a machining center on the leading end side by a chuck mechanism. In the case of a holder for a workpiece, a workpiece can be directly or indirectly chucked and mounted on the leading end side by a chuck mechanism, and this workpiece can be machined by, for example, an NC lathe machine. The chuck mechanism also includes a clamping mechanism. For example, the first clamped part is formed on a lever member such as a pull stud, and the chuck mechanism is opened and closed by pushing and pulling the first clamped part. Preferably, the second clamped part is formed on a mounting part to be mounted in a holder mounting hole, and the holder is mounted on the leading end of the spindle cylinder by the second clamped part.

As a second means, the pushing means retracts to a position not in contact with the first draw bar when not pressing the first draw bar.

As a result, when the first clamping mechanism and the second clamping mechanism of the second draw bar are activated and the holder is clamped, the pushing means does not become a load on the spindle cylinder side, and thus, energy loss and rotation unevenness when the spindle device rotates are reduced.

As a third means, a biasing force obtained when the second biasing means is biased is made greater than a biasing force obtained when the first biasing means is biased.

As a result, when the pressing force by the pushing means is released from a state where the first clamping mechanism and the second draw bar are released by pushing of the pushing means, first, the second clamping mechanism of the second draw bar is activated by the biasing force of the second biasing means, and then the first clamping mechanism of the first draw bar is activated with a time lag.

As a fourth means, when the first draw bar retreats from the predetermined advanced position, the first clamping mechanism of the first draw bar is activated after the second clamping mechanism of the second draw bar is activated.

In this manner, the first clamping mechanism is activated with a time lag after the second clamping mechanism is activated, resulting in prevention of erroneous mounting of the holder.

In the third means and the fourth means, two-stage clamping operation is enabled in which, for example, the holder is correctly mounted on the spindle device and clamped by the second clamping mechanism, and then the first clamping mechanism clamps the head of the movable pull stud, so that problems such as clamping the pull stud in, for example, an inclined state before the holder is correctly mounted on the spindle device, and a failure in operating the first clamping mechanism, are less likely to occur.

As a fifth means, the first draw bar includes an outer circumferential surface in contact with an inner circumferential surface of the second draw bar, and slides back and forth by being guided by the inner circumferential surface and the outer circumferential surface.

Accordingly, such as when the first draw bar advances and retreats or when the second draw bar advances by being pushed by the first draw bar, the first or second draw bar can be moved without rattling by making the central axes of the first and second draw bars coincide with each other in their relative advancing and retreating operations.

As a sixth means, the first clamping mechanism and the second clamping mechanism are arranged at positions shifted from each other in a front-rear direction so that the second clamping mechanism is arranged closer to the spindle leading end than the first clamping mechanism.

As a result, for example, it is easy to cope with a case where the positions of the first clamped part and the second clamped part of the holder are shifted from each other in the front-rear direction, and since the first clamping mechanism and the second clamping mechanism are not at the same position, the first clamping mechanism and the second clamping mechanism do not interfere with each other.

As a seventh means, the first clamping mechanism includes an interference body that advances and retreats in the radial direction of the spindle, and in a state where the first draw bar is arranged at the first advanced position, by arranging the interference body that clamps the first clamped part at a position facing an accommodating part formed on the inner circumferential surface of the second draw bar, the first clamping mechanism is released.

This is a specific configuration of the releasing structure for releasing from the clamping state of the first clamping mechanism. This enables the first clamping mechanism to release (unclamp) the first clamped part of the holder from the clamping state.

Further, as an eighth means, the second clamping mechanism includes an interference body that advances and retreats in the radial direction of the spindle, and in a state where the first draw bar is arranged at the first advanced position, by arranging the interference body that clamps the second clamped part at a position facing an accommodating part formed on an inner circumferential surface of the spindle cylinder, the second clamping mechanism is released.

This is a specific configuration of the releasing structure for releasing from the clamping state of the second clamping mechanism. This enables the second clamping mechanism to release (unclamp) the second clamped part of the holder from the clamping state.

Here, the interference body advances in the radial direction to clamp the clamped part, and the holder is mounted by holding this clamping state. It is more preferable that there is an engagement part that blocks movements of the holder in a removing direction. As the interference body that advances and retreats in the radial direction, for example, a ball or the like as described above, a collet, or a split claw may be arranged.

Further, as a ninth means, the holder is mounted in a holder mounting hole formed at a leading end of the spindle cylinder.

That is, this is a state where the holder is mounted in the holder mounting hole of the spindle device, and the first clamped part and the second clamped part of the holder are clamped by the first clamping mechanism and the second clamping mechanism.

Further, as a tenth means, the holder for a workpiece has a structure in which the first clamped part is formed on a lever member capable of advancing and retreating, and in a state where the second clamping mechanism is activated, the lever member is pulled out via the first clamped part and the workpiece in an unclamped state is clamped on the holder mounted on the spindle leading end, and the first draw bar advances to push back the lever member and the workpiece in a clamped state is unclamped.

Accordingly, the lever member can be advanced and retreated by the first draw bar in a state where the holder for a workpiece is clamped by activating the second clamping mechanism, so that the workpiece can be clamped and unclamped only by the first clamping mechanism of the first draw bar. The lever member is, for example, a pull stud, a pull bolt, or the like.

As an eleventh means, the first biasing means and the second biasing means are compression spring devices, and bias the first draw bar and the second draw bar in a retreating direction.

The use of the compression spring devices as described above contributes to weight reduction and compactness of the biasing means that bias the first draw bar and the second draw bar in the retreating direction. As a twelfth means, a machine tool is preferably configured to have the spindle device according to any one of the first to eleventh means mounted thereon.

Further, as a thirteenth means, a balancing machine is preferably configured to have the spindle device according to any one of the first to thirteenth means mounted thereon.

The machine tool is preferably, for example, an NC lathe machine tool, a machining center, or an NC lathe machine tool with an ATC. In a machining center, the spindle device is particularly preferably used as a spindle device of an ATC (automatic tool changer).

The inventions shown in the first to thirteenth means described above can be arbitrarily combined. In particular, it is preferable to include the configuration of the first means and to include a combination with at least any one configuration of the respective inventions of the second to thirteenth means. An arbitrary component of each invention of the first to thirteenth means may be extracted and combined with other components.

### Advantageous Effects of Invention

In the above invention, the first clamping mechanism and the second clamping mechanism can be released only by being pushed by the pushing means. In addition, by retracting the pushing means, the first clamping mechanism and the second clamping mechanism can be activated only by the action of the biasing forces of the first biasing means and the second biasing means, the structure for clamping and unclamping the two clamped parts of the holder is simplified, and this contributes to downsizing and cost reduction of the spindle device.

### Brief Description of Drawings

[FIG. 1] FIG. 1 is a partially broken longitudinal sectional view of a spindle unit according to a first embodiment.
[FIG. 2A] FIG. 2A is a longitudinal sectional view of an essential portion of a spindle device of the spindle unit according to the same first embodiment, illustrating a state where a first draw bar is not pressed by a striking metal, and the first draw bar and a second draw bar are retreated maximally.
[FIG. 2B] FIG. 2B is a longitudinal sectional view of an essential portion of the spindle device of the spindle unit according to the same first embodiment, illustrating a state where only the first draw bar is moved downward by being pressed by the striking metal.
[FIG. 2C] FIG. 2C is a longitudinal sectional view of an essential portion of the spindle device of the spindle unit according to the same first embodiment, illustrating a state where the first draw bar is pressed by the striking metal and the first draw bar and the second draw bar are moved maximally downward.
[FIG. 2D] FIG. 2D is a longitudinal sectional view of an essential portion of the spindle device, illustrating a state in the middle of mounting and removal of a holder to and from the spindle device of the spindle unit in the state in FIG. 2C.
[FIG. 2E] FIG. 2E is a longitudinal sectional view of an essential portion of the spindle device of the spindle unit according to the same first embodiment, illustrating a state where the striking metal in the pressing state slightly rises, only the second draw bar moves upward, and a flange part of the holder is clamped (a state where a second clamping mechanism is activated).
[FIG. 2F] FIG. 2F is a longitudinal sectional view of an essential portion of the spindle device of the spindle unit according to the same first embodiment, illustrating a state where the striking metal in the pressing state is completely separated, both the first draw bar and the second draw bar move upward, and a bulging part and the flange part of the holder are respectively clamped (a state where both a first clamping mechanism and the second clamping mechanism are activated) .
[FIG. 3A] FIG. 3A is a longitudinal sectional view of an essential portion of the spindle device of the spindle unit according to the same first embodiment, illustrating a state where the striking metal in the pressing state is completely separated, both the first draw bar and the second draw bar move upward, and the bulging part and the flange part of the holder are respectively clamped (a state where both the first clamping mechanism and the second clamping mechanism are activated).
[FIG. 3B] FIG. 3B is an enlarged explanatory view around the clamping mechanism of the spindle device of the spindle unit according to the same first embodiment, illustrating a state where the first draw bar is greatly retreated and a pull stud is pulled out from the holder while the bulging part and the flange part of the holder are respectively clamped.
[FIG. 4A] FIG. 4A is an enlarged explanatory view around the clamping mechanism of the spindle device of the spindle unit according to the same first embodiment, illustrating a state where the first draw bar and the second draw bar advance to positions where inner and outer balls are locked and cannot sink or come out.
[FIG. 4B] FIG. 4B is an enlarged explanatory view around the clamping mechanism of the spindle device of the spindle unit according to the same first embodiment, illustrating a state where the first draw bar and the second draw bar advance to positions where the inner and outer balls can sink and come out.
[FIG. 4C] FIG. 4C is an enlarged explanatory view around the clamping mechanism of the spindle device of the spindle unit according to the same first embodiment, illustrating a state where neither the bulging part nor the flange part of the holder in the middle of mounting or removal is clamped in the state in FIG. 4B.
[FIG. 4D] FIG. 4D is an enlarged explanatory view around the clamping mechanism of the spindle device of the spindle unit according to the same first embodiment, illustrating a state where the second draw bar is retreated from the state in FIG. 4C and the flange part of the holder is clamped.
[FIG. 4E] FIG. 4E is an enlarged explanatory view around the clamping mechanism of the spindle device of the spindle unit according to the same first embodiment, illustrating a state where the first draw bar is retreated from the state in Fig. 4D and both the bulging part and the flange part of the holder are clamped.
[FIG. 5] FIG. 5 is a partially enlarged perspective view of a leading end of the first draw bar.
[FIG. 6] FIG. 6(a) is a front view and FIG. 6(b) is a bottom view of a chuck holder with a chuck open.
[FIG. 7] FIG. 7(a) is a front view and FIG. 7(b) is a bottom view of the chuck holder with the chuck closed.
[FIG. 8] FIG. 8 is a partially broken longitudinal sectional view of a spindle unit according to a second embodiment.
[FIG. 9] FIG. 9(a) is a front view and FIG. 9(b) is a longitudinal sectional view of a tool chuck holder.
[FIG. 10] FIG. 10 is an explanatory diagram schematically illustrating an outline of a balancing machine according to a third embodiment.

### Description of Embodiments

Hereinafter, embodiments will be described with reference to the drawings.

### <First Embodiment>

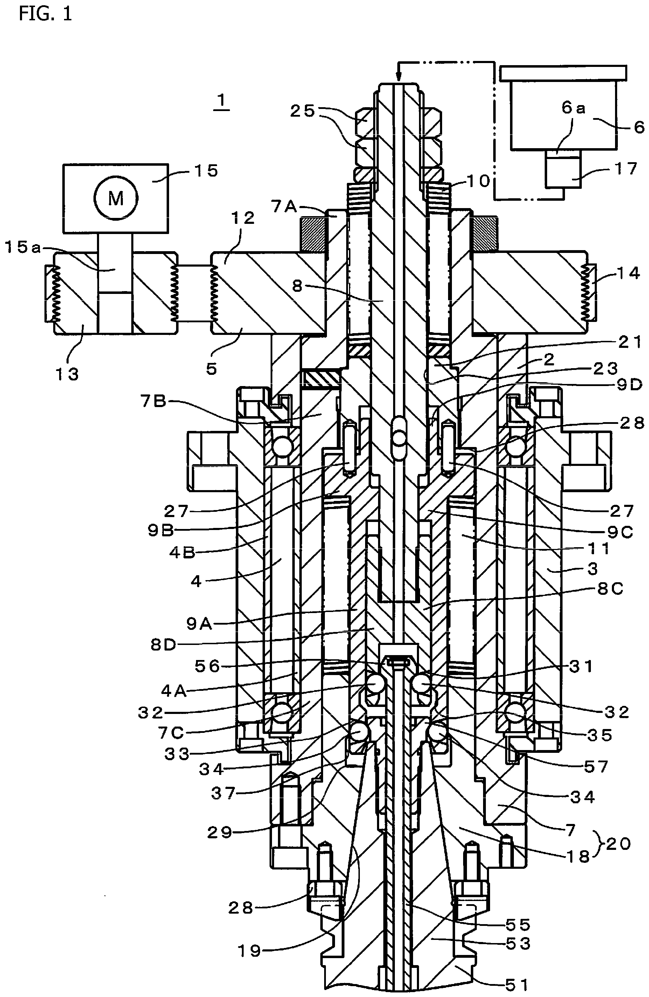

As illustrated in FIG. 1, a spindle unit 1 as an automatic tool changer mainly includes a spindle device 2, a bearing unit 4 surrounded by a housing 3 arranged around the spindle device 2, a spindle rotation mechanism 5, and a cylinder device 6. First, an outline of the spindle unit 1 will be described. In the following description, it is assumed that the spindle device 2 is arranged in a vertical direction in the spindle unit 1, and a leading end side of the spindle device 2 is a lower side. The spindle unit 1 is supported by a spindle frame (not illustrated).

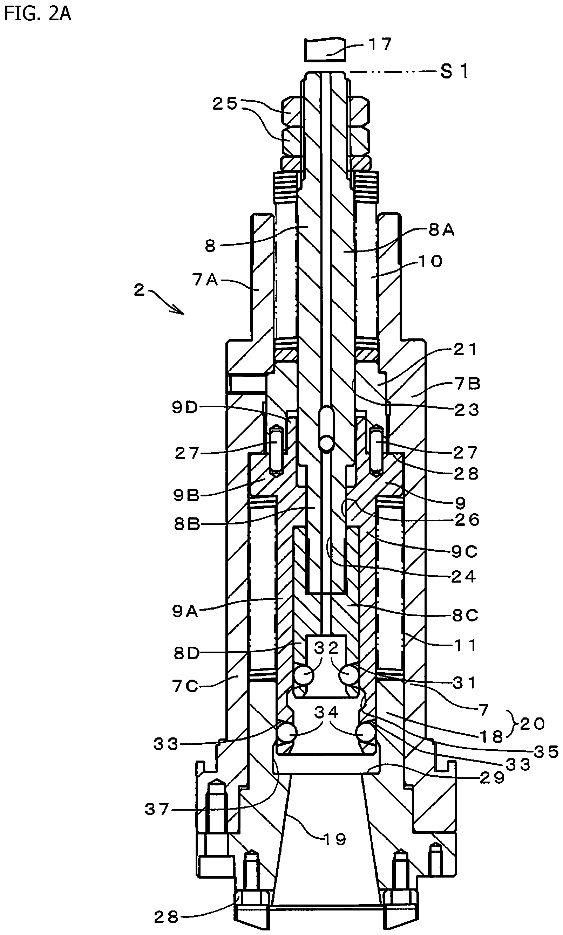

As illustrated in FIGS. 1 and 2A to 2F, the alloy-made spindle device 2 includes a spindle cylinder 7 having a substantially cylindrical shape. The spindle cylinder 7 includes a passage continuing in the vertical direction, and has a perfectly circular outer circumferential shape. A first draw bar 8 and a second draw bar 9 are accommodated in the spindle cylinder 7. A first disc spring assembly 10 as a first biasing means is arranged between the first draw bar 8 and the spindle cylinder 7. A second disc spring assembly 11 as a second biasing means is arranged between the second draw bar 9 and the spindle cylinder 7.

The spindle device 2 is surrounded by the bearing unit 4. The bearing unit 4 is a portion that rotatably supports the spindle device 2 in the spindle unit 1. An inner cylinder part 4A of the bearing unit 4 is a portion that is fixed to the spindle device 2 and rotates together with the spindle device 2. An outer cylinder part 4B of the bearing unit 4 is a portion that is fixed to the housing 3 side and does not rotate. The housing 3 is supported by the spindle frame (not illustrated).

A first pulley 12 constituting the spindle rotation mechanism 5 is fixed to an outer circumference of a first cylinder part 7A in an upper portion of the spindle cylinder 7. At a lateral position away from the first pulley 12, a second pulley 13 is supported by a bearing fixed to the spindle frame side (not illustrated). A belt 14 for drive transmission is wound around the outer circumferences of the first pulley 12 and the second pulley 13. An output shaft 15a of a motor device 15 is connected coaxially with the second pulley 13. The motor device 15 is supported on the spindle frame side (not illustrated).

The cylinder device 6 is arranged at an upper position of the spindle cylinder 7. The cylinder device 6 is supported on the spindle frame side (not illustrated). In the cylinder device 6, a piston rod 6a driven by an air compressor (not illustrated) advances. The piston rod 6a is arranged so as to advance downward and retract, and a columnar striking metal 17 is connected to a leading end of the piston rod 6a.

Next, the spindle device 2 will be described in more detail.

As illustrated in FIGS. 1 and 2A to 2F, a spindle cap 18 is connected to a front end side of the spindle cylinder 7. The spindle cap 18 is a cylindrical body continuing in the vertical direction and having a circular cross section. The spindle cap 18 is fixed while being fitted into a front end of the spindle cylinder 7. The spindle cylinder 7 has three regions having different inner diameters, and the first cylinder part 7A to a third cylinder part 7C are formed in this order from the top. The spindle cylinder 7 has an inner diameter gradually increasing in this order. On an inner circumferential surface of the spindle cap 18, a holder mounting hole 19 having a tapered surface shape with a diameter increasing toward the lower side is formed. The spindle cap 18 constitutes a case 20 of the spindle device 2 together with the spindle cylinder 7.

In an internal space of the case 20, the first draw bar 8 and the second draw bar 9 are arranged in series so as to partially overlap each other.

A fixing ring 21 is fixed in the second cylinder part 7B of the spindle cylinder 7. A passage 23 continuing in the vertical direction is formed at the center of the fixing ring 21.

The first draw bar 8 is configured to have a circular outer shape in a cross section and is composed of three portions with different diameters. That is, the first draw bar 8 includes a first large-diameter part 8A, a small-diameter part 8B having a smaller diameter adjacent to the first large-diameter part 8A and extending downward (forward), and a second large-diameter part 8C having the largest diameter connected to a leading end side of the small-diameter part 8B. A front end of the second large-diameter part 8C is a cylindrical part 8D formed into a cylindrical shape having the same outer shape as the second large-diameter part 8C. An internal space of the cylindrical part 8D is a position at which a rear end side of a pull stud 55 of a chuck holder 51 described later is accommodated and a bulging part 56 is clamped. A coolant passage 24 continuing vertically is formed at an axial center position of the first draw bar 8.

The first disc spring assembly 10 is arranged around the first large-diameter part 8A of the first draw bar 8. The first disc spring assembly 10 is arranged between the first large-diameter part 8A and the spindle cylinder 7, and is arranged so as to be sandwiched in a biased state between a nut 25 fixed to an upper end of the first large-diameter part 8A and the fixing ring 21 in the vertical direction.

The second draw bar 9 is also configured to have a circular outer shape in a cross section. The second draw bar 9 includes a cylindrical main body 9A, a flange part 9B formed so as to protrude on an outer circumference close to an upper portion of the main body 9A, a partition wall 9C between the main body 9A and the flange part 9B, and a ring part 9D protruding upward in a ring shape. A passage 26 is formed in the partition wall 9C.

A portion close to a lower portion of the main body 9A of the second draw bar 9 is accommodated in the spindle cap 18 and brought into close contact with an inner circumferential surface 18a, and an outer circumference of the flange part 9B is brought into close contact with the second cylinder part 7B of the spindle cylinder 7. With such a close contact structure, the second draw bar 9 is guided when linearly sliding in the vertical direction. An internal space close to the leading end of the main body 9A is a position at which a flange part 57 of the chuck holder 51 described later is accommodated and a constricted part 58 is clamped.

The second disc spring assembly 11 is arranged around the main body 9A of the second draw bar 9. The second disc spring assembly 11 is arranged between the main body 9A and the spindle cylinder 7, and is arranged so as to be sandwiched in a biased state between the flange part 9B and the spindle cap 18 in the vertical direction. A pin 27 for preventing rotation of the second draw bar 9 in a circumferential direction is arranged between the second draw bar 9 and the fixing ring 21. A key 28 for preventing the chuck holder 51 from rotating in the circumferential direction by meshing with the chuck holder 51 side when the chuck holder 51 is attached to the spindle device 2 is mounted to a leading end of the holder mounting hole 19.

An arrangement state of the first draw bar 8 and the second draw bar 9 having such a configuration with respect to the case 20 (the spindle cylinder 7 and the spindle cap 18) will be described.

The second draw bar 9 is arranged so as to be slidable in the cylindrical case 20, and is also configured to have a cylindrical shape to accommodate the first draw bar 8 and allow for sliding movement of the first draw bar 8. A lower portion of the first draw bar 8 is slidably accommodated in the second draw bar 9. That is, the case 20, the first draw bar 8, and the second draw bar 9 constitute a double sliding mechanism overlapping inside and outside.

A portion close to a lower end of the first large-diameter part 8A of the first draw bar 8 is accommodated in the ring part 9D on the second draw bar 9 side, the small-diameter part 8B communicates with the passage 26 of the partition wall 9C on the second draw bar 9 side, and the second large-diameter part 8C is arranged inside the main body 9A on the second draw bar 9 side. All the members are arranged in close contact with each other, and the first draw bar 8 is guided when linearly sliding in the vertical direction.

As a lower end of the first large-diameter part 8A of the first draw bar 8 comes into contact with an upper surface of the partition wall 9C on the second draw bar 9 side, further downward movement of the first draw bar 8 is restricted. This position is defined as the lowest position, and at the upper side, when an upper end of the second large-diameter part 8C comes into contact with a lower surface of the partition wall 9C, further upward movement of the first draw bar 8 is restricted. As an upper surface of the flange part 9B of the second draw bar 9 comes into contact with a lower surface 28 of the second cylinder part 7B of the spindle cylinder 7, further upward movement of the second draw bar 9 is restricted. As a front end of the main body 9A of the second draw bar 9 comes into contact with a shelf part 29 protruding inward at an inner circumference of the spindle cap 18, further downward movement of the second draw bar 9 is restricted. A leading end of the cylindrical part 8D of the first draw bar 8 is always arranged at a retreated position relative to the leading end of the second draw bar 9.

Next, clamping mechanisms of the first draw bar 8 and the second draw bar 9 will be described with reference to FIGS. 2A to 2F, 4A to 4E, and 5.

The first draw bar 8 clamps the pull stud 55 side of the chuck holder 51 described later, and the second draw bar 9 clamps a mounting part 53 side of the chuck holder 51 described later.

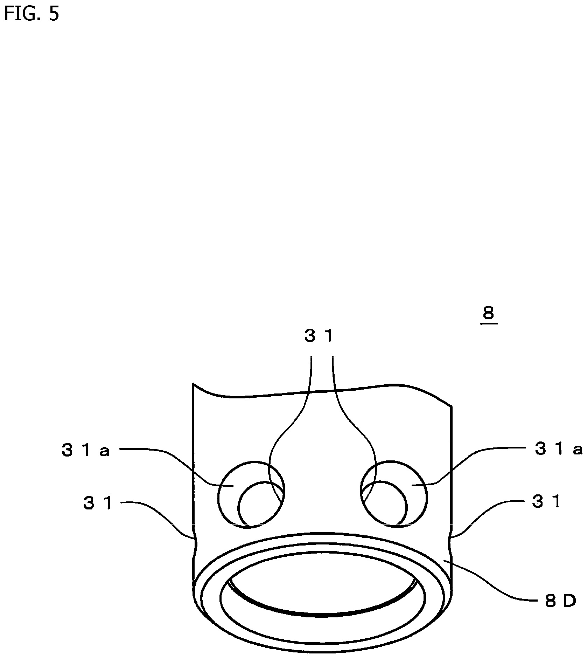

As illustrated in FIG. 5, a plurality of first through holes 31 are formed in the cylindrical part 8D of the first draw bar 8 at predetermined intervals in the circumferential direction. Each of the first through holes 31 has a circular opening communicating with the inside and the outside in a radial direction of the cylindrical part 8D of the first draw bar 8. Each of the first through holes 31 is configured such that an inner opening diameter is smaller than an outer opening diameter and an inner wall has a tapered shape. A first ball 32 is accommodated in each of the first through holes 31. A diameter of the first ball 32 is configured to be larger than the inner opening diameter of the first through hole 31 and smaller than the outer opening diameter of the first through hole 31.

A plurality of second through holes 33 are also formed at predetermined intervals in the circumferential direction at positions close to the leading end of the second draw bar 9. Since the configuration of the second through hole 33 is the same as that of the first through hole 31, description thereof will be omitted. A second ball 34 is accommodated in each of the second through holes 33. Since the configuration and operation of the second ball 34 are the same as those of the first ball 32, detailed description thereof will be omitted.

First recesses 35 are formed at predetermined intervals in the circumferential direction at higher positions inside the main body 9A of the second draw bar 9 than the second through holes 33.

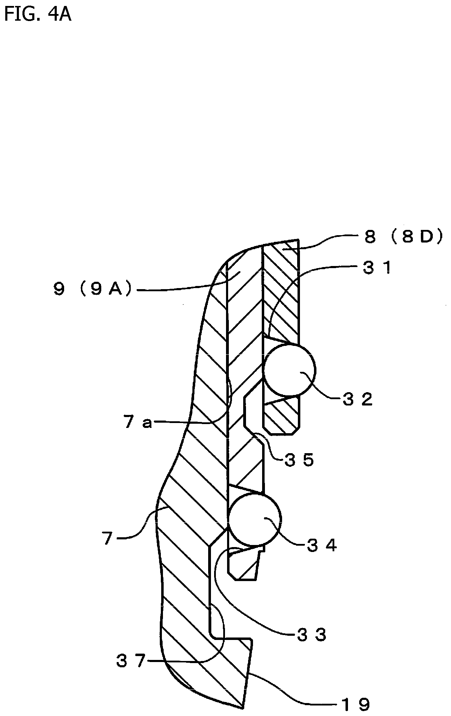

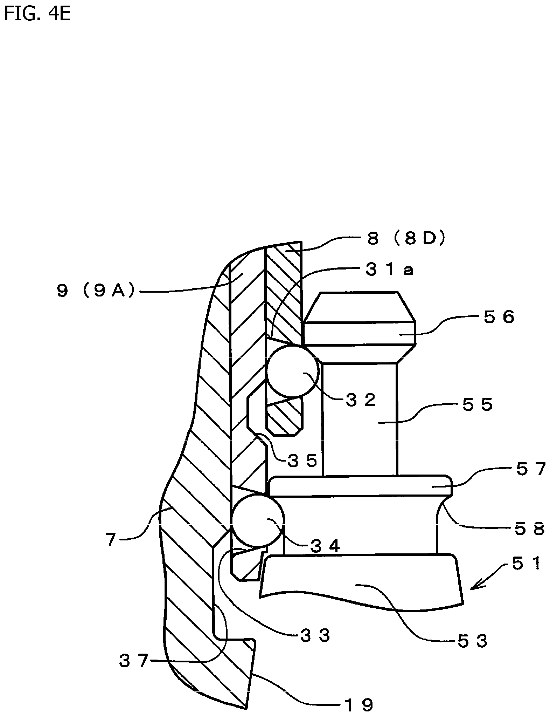

The first recess 35 has a circular opening shape and has the same diameter as the outer opening diameter of the first through hole 31. The first recess 35 is configured to have a recess shape slightly deeper than a protrusion amount of the first ball 32 in a state where the first ball 32 advances to the innermost side in the first through hole 31 (the state in FIGS. 4A and 4E). That is, the first ball 32 retreats toward the outside in a state where the first recess 35 is matched with the first through hole 31, and the first ball 32 does not protrude from the surface of the first draw bar 8 in a state where the first ball 32 sinks maximally in the first recess 35. The wall surface of the first recess 35 is formed into a tapered shape so that the first ball 32 easily sinks into and comes out from the first through hole 31.

The first recess 35 is matched with the first through hole 31 according to a relative positional relationship between the first draw bar 8 and the second draw bar **9.** When the first recess 35 and the first through hole 31 are matched with each other, the first ball 32 turns into a loosely fitted state and is accordingly enabled to retract toward the outside and turns into an unclamping state. On the other hand, in an unmatched state, the first ball 32 is held unmovably inward and outward while its leading end side slightly protrudes to the inside of the first through hole 31, turning into a clamping state. In the present embodiment, clamping means that the plurality of first balls 32 press a shaft-shaped part of the pull stud 55 and a shaft-shaped part of the mounting part 53 of the chuck holder 51 from the circumference.

Second recesses 37 are formed at predetermined intervals in the circumferential direction in a lower inner circumferential surface 7a of the spindle cylinder 7 in the vicinity of the base part side of the holder mounting hole 19.

The second recess 37 is configured to have a diameter larger than that of the second through hole 33 in order to avoid interference of the second draw bar 9 with the spindle cylinder 7. Similarly to the first draw bar 8 side, in a state where the second ball 34 retreats maximally and sinks in the second recess 37 while the second recess 37 is matched with the second through hole 33, the second ball 34 does not protrude from the surface of the second draw bar **9.** The wall surface of the second recess 37 is formed into a tapered shape so that the second ball 34 easily sinks into and comes out from the second through hole 33.

The second recess 37 is matched with the second through hole 33 by arranging the second draw bar 9 at a predetermined advanced position. Similarly to the above, in a matched state, since the second ball 34 is in a loosely fitted state, the second ball 34 can retract toward the outside, and turns into an unclamping state. On the other hand, in an unmatched state, the second ball 34 is held unmovably inward and outward while its leading end side slightly protrudes, and accordingly turns into a clamping state.

The first through holes 31, the first balls 32, and the first recesses 35, etc., constitute a first clamping mechanism between the first draw bar 8 and the second draw bar 9.

The second through holes 33, the second balls 34, and the second recesses 37, etc., constitute a second clamping mechanism between the spindle cylinder 7 and the second draw bar 9.

The spindle unit 1 configured as described above is mounted on a saddle (not illustrated) in a machining center, and machines a workpiece under the control of a computer device (not illustrated).

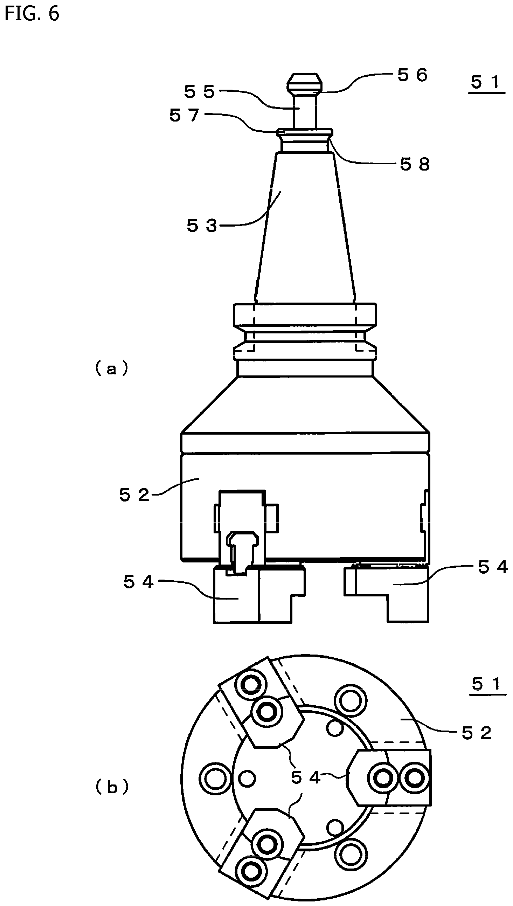

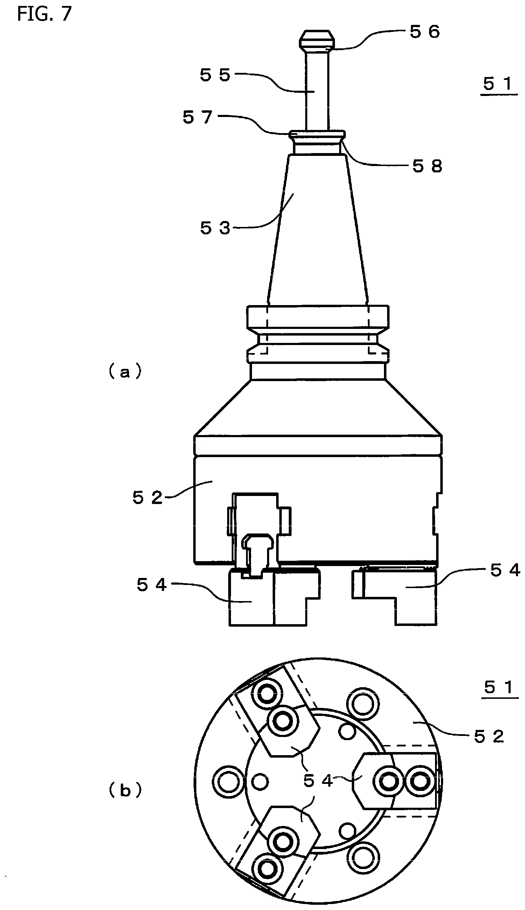

In the first embodiment, the three-claw chuck holder 51 illustrated in FIGS. 6(a), 6(b), 7(a) and 7(b) is mounted in the holder mounting hole 19 of the spindle device 2. The chuck holder 51 includes a holder main body 52 in which a chuck mechanism (not illustrated) is accommodated and the mounting part 53 to be mounted on the spindle device 2. The mounting part 53 is a conical protrusion formed integrally with the holder main body 52. An outer circumferential shape of the mounting part 53 corresponds to an inner circumferential shape of the holder mounting hole 19. Three claw parts 54 are movably attached to the holder main body 52. The state in FIGS. 6(a) and 6(b) is a state where the claw parts 54 are opened maximally, and the state in FIGS. 7(a) and 7(b) is a state where the claw parts 54 are closed maximally (chucked state). The pull stud 55 is caused to protrude from a rear end of the mounting part 53. The pull stud 55 is connected as a lever member to the chuck mechanism in the holder main body 52, and when the pull stud 55 advances (is pulled) rearward, the claw parts 54 are changed from an open state into a closed state.

The bulging part 56 having a substantially elliptical shape protruding outward as an engagement part is integrally formed at a leading end of the pull stud 55. The flange part 57 as an engagement part protruding outward in a disc shape is integrally formed at a leading end of the mounting part 53. The constricted part 58 as an engagement part is formed between the mounting part 53 adjacent to the flange part 57 and the flange part 57. The constricted part 58 is a portion where a recess that is discontinuous from the continuous tapered shape of the mounting part 53 is formed into a collar shape across the entire circumference. When the chuck holder 51 is mounted in the holder mounting hole 19 (the tapered surfaces are in close contact with each other), the flange part 57 is arranged at an inner side relative to the holder mounting hole 19.

Next, clamping and unclamping operations of the chuck holder 51 with respect to the spindle device 2 in the spindle unit 1 will be described with reference to FIGS. 2A to 2F and FIGS. 4A to 4E. When the chuck holder 51 is mounted on the spindle device 2, a state where the claw parts 54 are maximally opened in FIGS. 6(a) and 6(b) is a default state of the chuck holder 51.

A. FIGS. 2A and 4A illustrate a state where the first draw bar 8 is pushed maximally upward by a biasing force of the first disc spring assembly 10 and the second draw bar 9 is pushed maximally upward by a biasing force of the second disc spring assembly 11. In this state, both the first clamping mechanism and the second clamping mechanism are released. This advanced position is an initial advanced position of the first draw bar 8. The initial advanced position is S1 in FIG. 2A, and a terminal end position of the first draw bar 8 is used as a reference. The terminal end position of the first draw bar 8 described as follows is determined by a proximity sensor (not illustrated).

The biased state of the first draw bar 8 by the first disc spring assembly 10 and the biased state of the first draw bar 8 by the first disc spring assembly 10 will be described in more detail. The first disc spring assembly 10 presses the nut 25 with reference to the fixing ring 21. Then, the first draw bar 8 is pushed upward via the nut 25. As an upper end of the second large-diameter part 8C of the first draw bar 8 comes into contact with the ring part 9C, further upward movement of the first draw bar 8 is restricted. The second disc spring assembly 11 presses the flange part 9B with reference to the spindle cap 18. Then, the second draw bar 9 is pushed upward via the flange part 9B. Since the flange part 9B comes into contact with the lower surface 28 of the second cylinder part 7B, further upward movement of the second draw bar 9 is restricted.

At this time, as illustrated in FIG. 4A, the first ball 32 in the first through hole 31 is locked at a clamping position at which the first ball 32 is not allowed to move toward the first recess 35. The second ball 34 in the second through hole 33 is also locked at a clamping position at which the second ball 34 is not allowed to move toward the second recess 37. That is, in this state, since the chuck holder 51 interferes with the first ball 32 and the second ball 34, the chuck holder 51 is still in an unconnectable state.

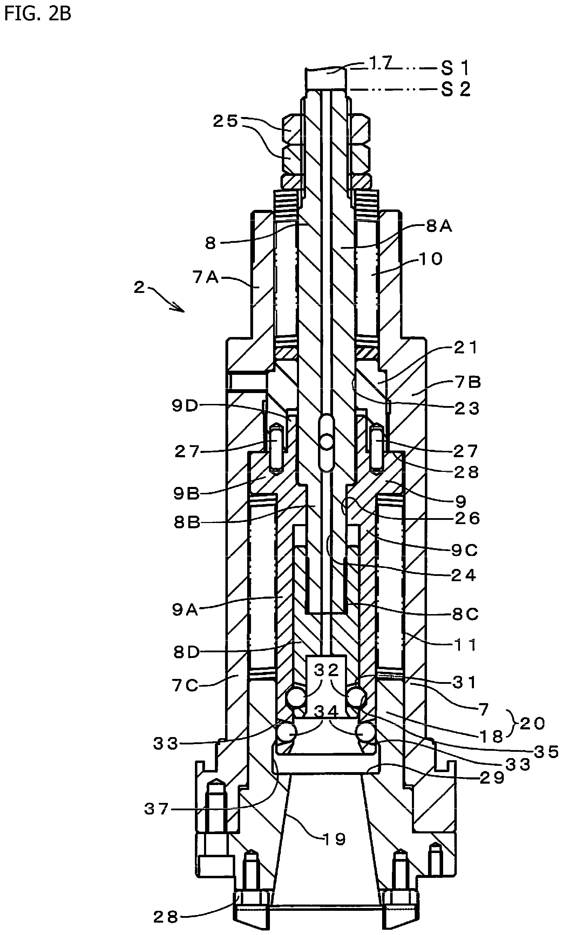

B. Next, the striking metal 17 at the leading end of the piston rod 6a of the cylinder device 6 is moved downward by a predetermined control operation to press the first draw bar 8 downward. Due to the downward movement of the striking metal 17, the first draw bar 8 is moved downward against the biasing force of the first disc spring assembly 10 pushing up the first draw bar 8. The first draw bar 8 moves from the position S1 in FIG. 2A to a position S2 in FIG. 2B. At this time, since the spring force of the second disc spring assembly 11 is stronger than that of the first disc spring assembly 10, the second disc spring assembly 11 is not compressed when the first disc spring assembly 10 is compressed by the downward movement of the striking metal 17. That is, only the first draw bar 8 moves downward, and the second draw bar 9 does not move downward but remains at that position.

In FIG. 2B, the first draw bar 8 moves downward, and the first ball 32 in the first through hole 31 is allowed to move toward the first recess 35 and turns into an unclamping state. On the other hand, the second ball 34 in the second through hole 33 also remains at the clamping position at which the second ball 34 is not allowed to move toward the second recess 37.

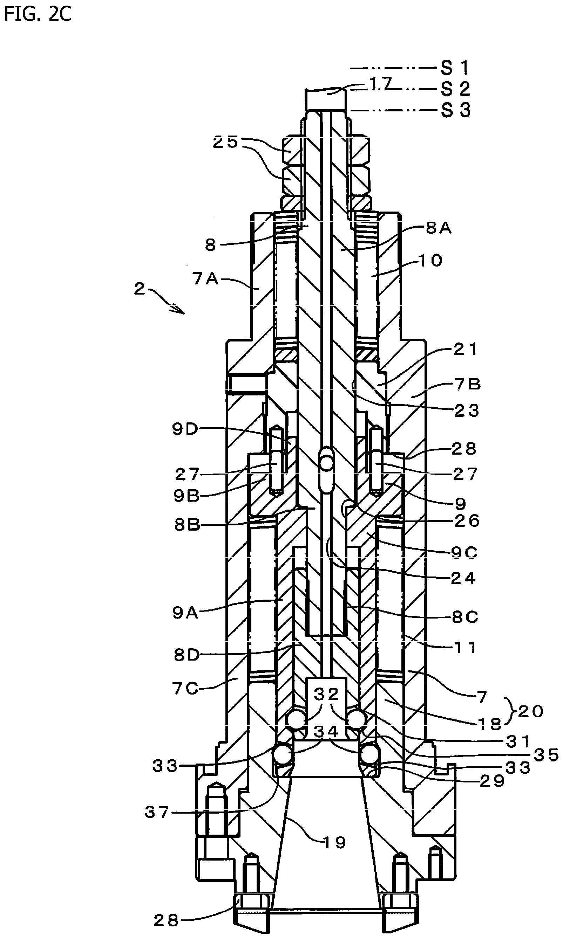

C. As the striking metal 17 is further moved downward, the second draw bar 9 is pressed downward via the first draw bar 8 moved maximally downward when the biasing force caused by the maximum compression or compression of the first disc spring assembly 10 exceeds the biasing force of the second disc spring assembly 11. At this stage, the second draw bar 9 is moved downward against the biasing force of the second disc spring assembly 11 pushing up the second draw bar 9 due to the downward movement of the striking metal 17. FIG. 2C illustrates a state where the first draw bar 8 has moved to a position S3 lower than S1 and S2, and the second draw bar 9 has moved maximally downward.

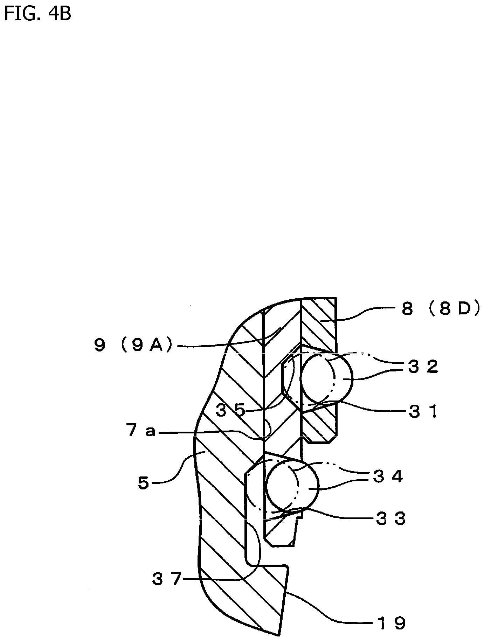

At this time, as illustrated in FIG. 4B, the first ball 32 in the first through hole 31 is at the unclamping position at which the first ball 32 is allowed to move toward the first recess 35. The second ball 34 in the second through hole 33 is also at the unclamping position at which the second ball 34 is allowed to move toward the second recess 37. That is, the chuck holder 51 turns into a connectable state.

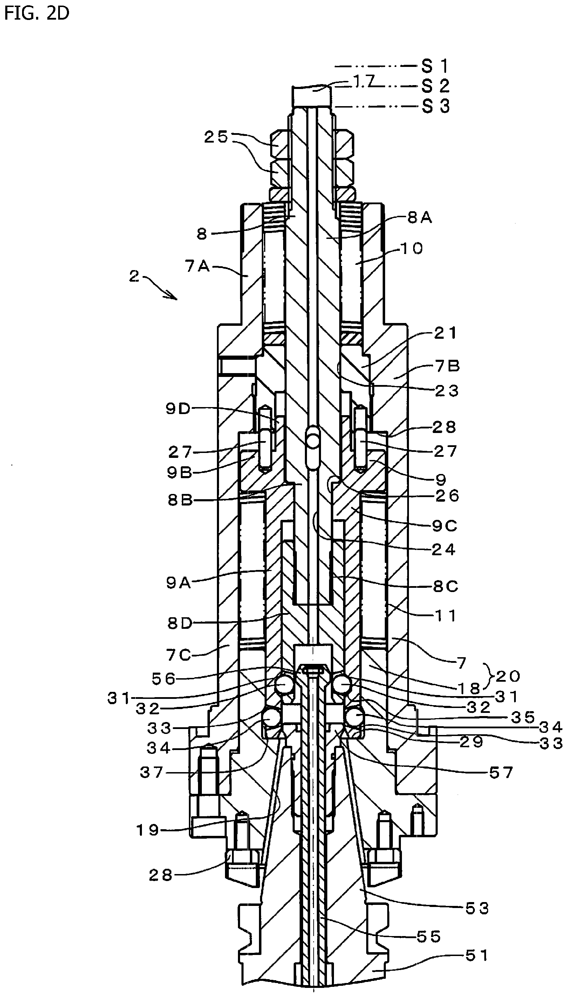

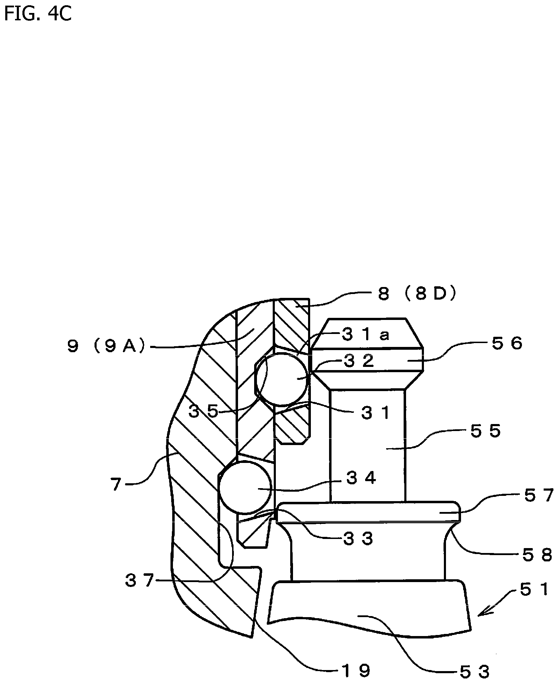

D. As illustrated in FIG. 2D, the chuck holder 51 is mounted in the holder mounting hole 19 of the spindle device 2 by a predetermined control operation in the state of C. Even when the mounting part 53 and the pull stud 55 advance to the inner side relative to the holder mounting hole 19, the bulging part 56 of the pull stud 55 and the flange part 57 of the mounting part 53 do not interfere with the first ball 32 (the second ball 34) and advance is not hindered as illustrated in FIG. 4C.

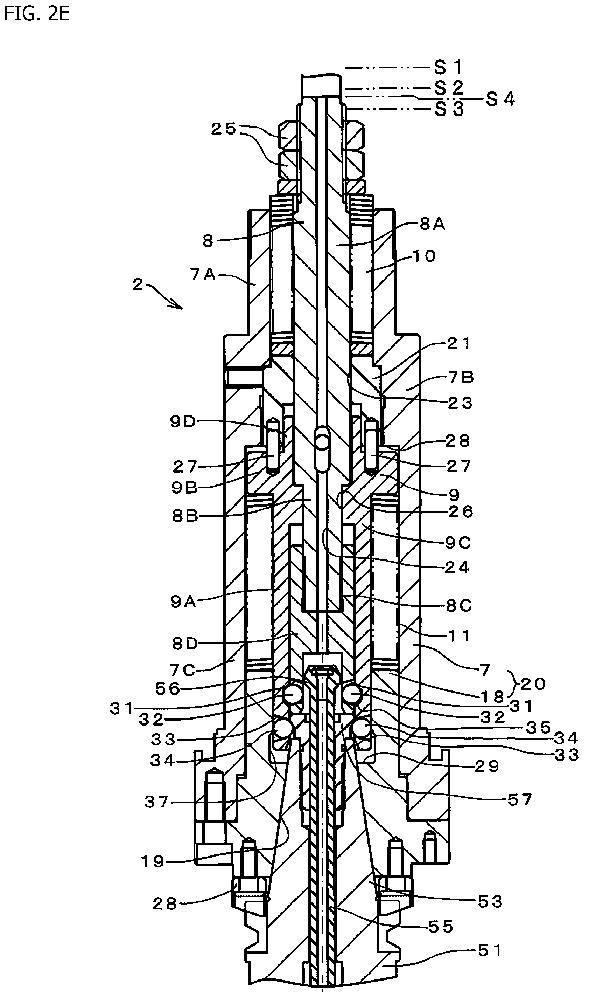

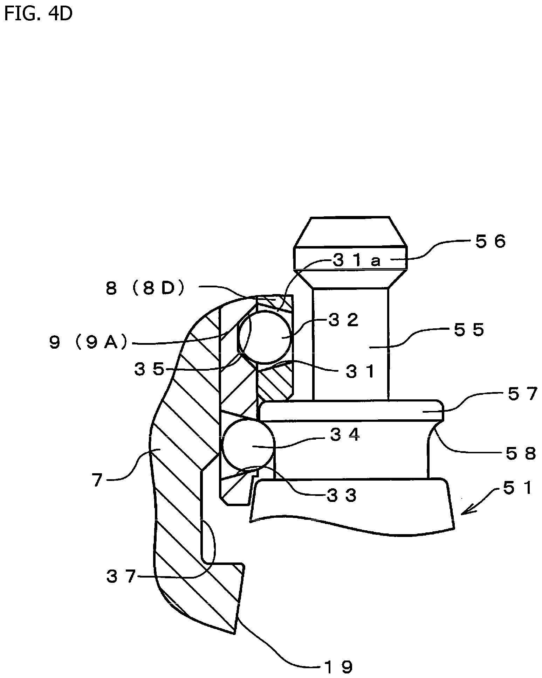

E. In a state where the chuck holder 51 is completely mounted in the holder mounting hole 19 of the spindle device 2, the striking metal 17 is moved upward by a predetermined control operation. Then, as illustrated in FIG. 2E, the compressed second disc spring assembly 11 releases its strong biasing force along with the release of the load, and pushes up the second draw bar 9 again. A position at this time is defined as S4 higher than S3. Along with the upward movement of the second draw bar 9, the constricted part 58 at the rear end of the mounting part 53 of the chuck holder 51 is clamped by the second clamping mechanism (by the second balls 34). However, at this stage, since the striking metal 17 is in the middle of upward movement, the first draw bar 8 is not yet activated (the state in FIG. 4D).

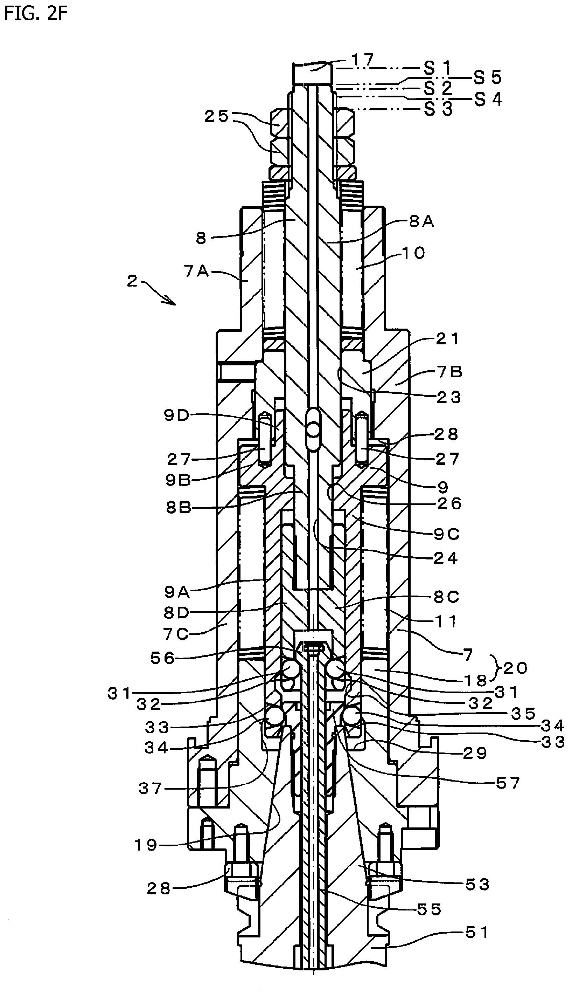

F. When the striking metal 17 further moves upward, the compressed first disc spring assembly 10 releases its strong biasing force along with the release of the load, and pushes up the first draw bar 8 again as illustrated in FIG. 2F. This causes the first draw bar 8 to retreat relatively, so that the first recess 35 moves and (a constricted corner portion at the base of the bulging part 56 of) the pull stud 55 of the chuck holder 51 is also clamped by the first clamping mechanism (by the first balls 32). In this way, in a state where the first clamping mechanism is activated and the pull stud 55 is clamped, the pull stud 55 is successively pulled out rearward (upward) by pushing up (that is, upward retreat) of the first draw bar 8 (actually, instantaneously with the upward movement of the striking metal 17), and the claw parts 54 of the chuck holder 51 are closed. A position of the first draw bar 8 at this time is defined as S5 higher than S4. Since the chuck holder 51 is clamped, S5 is a position lower than S1. FIG. 2F illustrates a case where the claw parts 54 have slightly moved on the assumption that a workpiece (not illustrated) has been chucked in the state in FIGS. 6(a) and 6(b). Therefore, here, the claw parts 54 are not as closed as those in FIGS. 7(a) and 7(b).

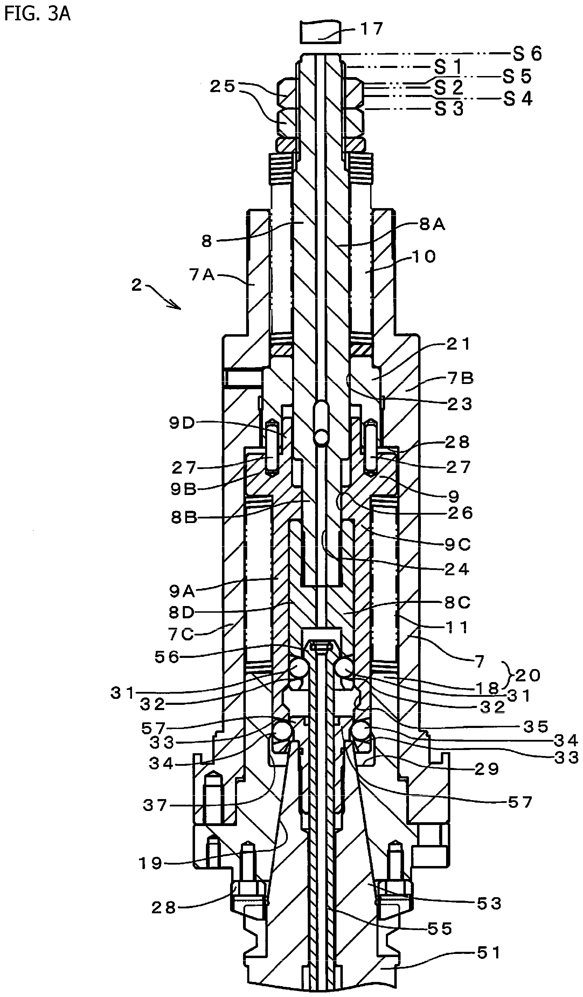

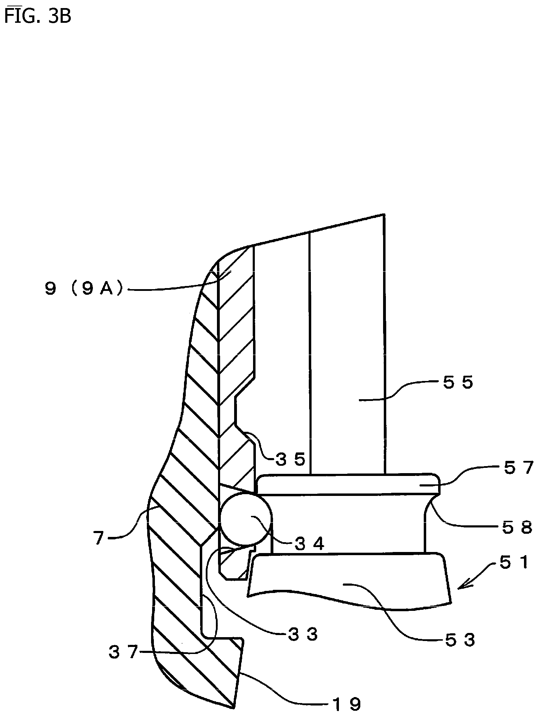

G. F describes an operation when the workpiece is not chucked, that is, when the movement of the claw parts 54 is large as in FIGS. 7(a) and 7(b). As illustrated in FIG. 3A, since a pull-out margin of the pull stud 55 is larger than in FIG. 2F, the first draw bar 8 is arranged at a position S6 higher than S4 (the state in FIG. 3B).

Conversely, when the chuck holder 51 is removed from the state where the chuck holder 51 is mounted on the spindle device 2, the striking metal 17 is advanced (moved downward) contrary to the above, and a control is performed so that the state reaches A in order from F (G). In the above, the drawings in which the first draw bar 8 and the second draw bar 9 are operated separately are illustrated in order to describe each stage of the movement. However, the movement of the striking metal 17 and the movement such as the release of the biasing forces of the first disc spring assembly 10 and the second disc spring assembly 11 are instantaneous, so that in actuality, the first clamping mechanism and the second clamping mechanism when the chuck holder 51 is mounted are activated almost simultaneously.

With the above configuration, the following effects are obtained in the spindle unit 1 of the first embodiment.
(1) The chuck holder 51 having the double clamped parts at the inside and the outside (and at the front and the rear) can be clamped by driving only one cylinder device 6 as the pushing means. Since only one cylinder device 6 is used, the spindle unit 1 and the spindle device 2 can be reduced in size and weight.
(2) The mechanism operates the second draw bar 9 via the first draw bar 8 only by advancing and retreating the striking metal 17 connected to the piston rod 21, and the first draw bar 8 is advanced and retreated by the first disc spring assembly 10 and the second draw bar 9 is advanced and retreated by the second disc spring assembly 11, so that this mechanism has a simple configuration and hardly malfunctions.
(3) The pull stud 55 of the chuck holder 51 can be clamped by the first clamping mechanism only by the biasing force of the first disc spring assembly 10 and pulled upward (rearward), and this contributes to downsizing and weight reduction of the spindle device 2.
(4) Since the first draw bar 8 and the second draw bar 9 are arranged in series and partially overlap each other, the entire length and the entire width of the spindle device 2 can be reduced.
(5) In the clamping operation, the second clamping mechanism using the second draw bar 9 is activated first to clamp the mounting part 53 of the chuck holder 51, and then, the first clamping mechanism using the first draw bar 8 is activated to clamp the pull stud 55 of the chuck holder 51 with a time lag, so that the chuck holder 51 can be reliably fixed to the holder mounting hole 19 first, and an erroneous operation in clamping of the pull stud 55, for example, a clamping failure in which firm clamping at a predetermined position cannot be performed with the second balls 34 due to movement or vibration of the pull stud 55 hardly occurs.
(6) When the chuck holder 51 is clamped, the striking metal 17 is retreated and does not come into contact with the first draw bar 8. Therefore, when the spindle device 2 is rotated after that, the cylinder device 6 side does not become a load, and energy loss and rotation unevenness during the rotation are reduced.
(7) Since the cylinder device 6 does not become a load and the spindle device 2 can rotate at a high speed, the spindle device 2 is suitable for, for example, not only machining in an NC lathe device but also machining in a machining center, and a machine tool that can be used for both of them can be provided.

### <Second Embodiment>

A second embodiment is a variation of the first embodiment, and is an example in which the motor device 15 and the pulleys 12 and 13 are not used as the spindle rotation mechanism 5 for rotating the spindle device 2. In addition, this is an example in which the striking metal 17 is not used as a means that pushes the first draw bar 8. Members having the same functions as those in the first embodiment are denoted by the same reference signs, and detailed description thereof will be omitted.

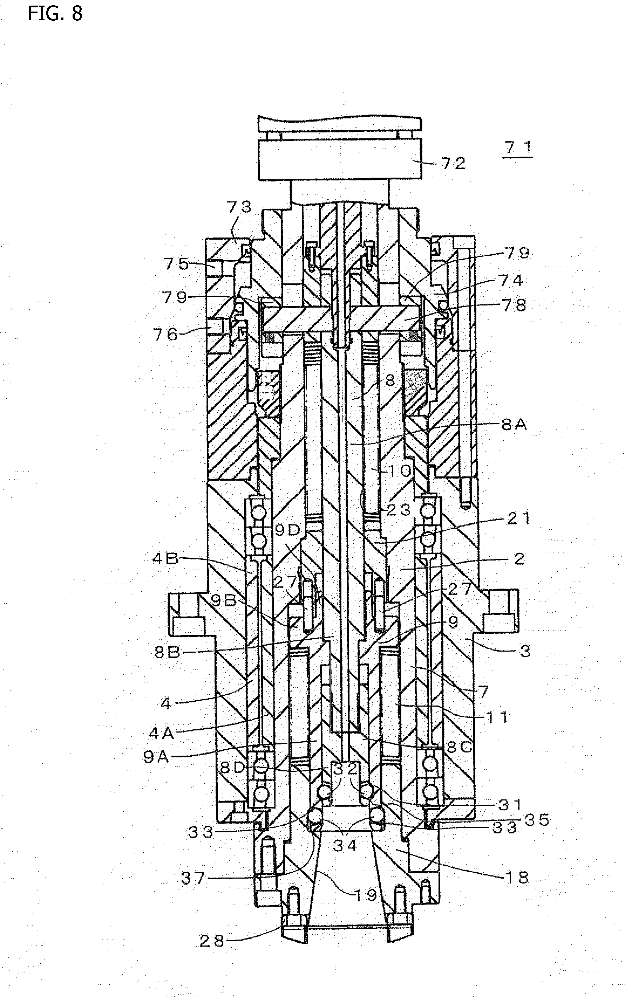

As illustrated in FIG. 8, a spindle unit 71 of the second embodiment includes a spindle motor device (not illustrated) as a spindle rotation mechanism, and a coupling 72 connected to the spindle motor device is directly connected to the spindle cylinder 7 of the spindle device 2. As a result, a rotational force from the coupling 72 is transmitted to the spindle device 2. A cylinder device 73 is arranged at an upper position of the spindle unit 71 so as to surround the spindle cylinder 7. The cylinder device 73 is a portion that is fixed to the housing 3 side and does not rotate. Inside the cylinder device 73, a piston 74 as a pushing means is arranged so as to be advanced and retreated in the vertical direction. The piston 74 includes a first port 75 and a second port 76 for introducing hydraulic oil supplied from a hydraulic pump device (not illustrated) formed on a lateral side of the cylinder device 73. The piston 74 slides in the vertical direction based on the supply of the hydraulic oil from the hydraulic pump device into the cylinder device 73.

A push pin 78 orthogonal to an axial direction of the first draw bar 8 is connected to an upper end of the first draw bar 8. Sliders 79 are fixed to both ends of the push pin 78.

In such a configuration, when upper surfaces of the sliders 79 are pressed against a bottom surface of the piston 74, the first draw bar 8 is moved downward against a biasing force of the first disc spring assembly 10 via the push pin 78. When the biasing force caused by the maximum compression or compression of the first disc spring assembly 10 by the piston 74 exceeds the biasing force of the second disc spring assembly 11, the second draw bar 9 is pressed downward via the first draw bar 8 moved maximally downward. Then, after the chuck holder 51 is accommodated in the holder mounting hole, a hydraulic pressure of the cylinder device 73 is controlled to raise the piston 74 and separate it from the sliders 79, and accordingly, both the first clamping mechanism and the second clamping mechanism can be activated with a time lag between them. Even with this spindle unit 71, an effect similar to that of the spindle unit 1 of the first embodiment is obtained.

### <Third Embodiment>

A third embodiment is an example in which the spindle device 2 described above is applied not to an automatic tool changer but to a balancing machine. Members having the same functions as those in the first embodiment are denoted by the same reference signs, and detailed description thereof will be omitted.

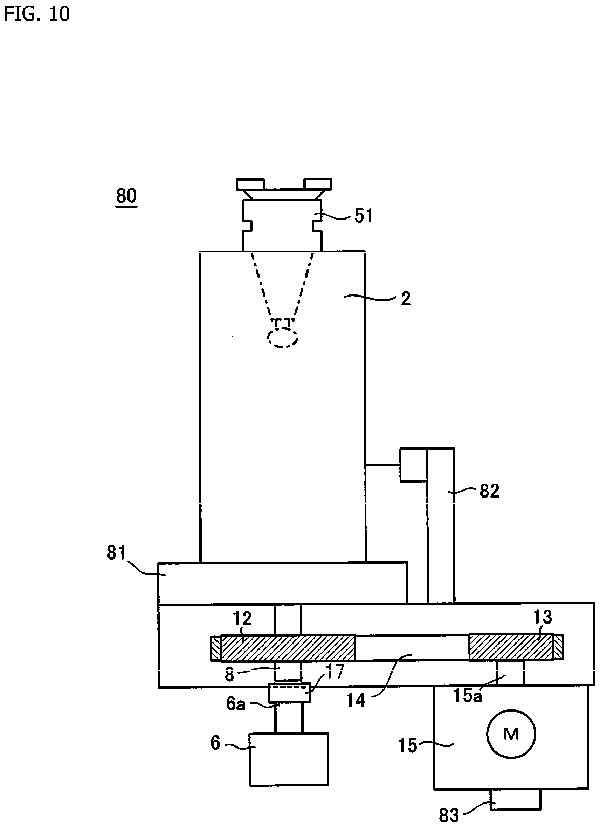

As illustrated in FIG. 10, the spindle device 2 that is a main component of a balancing machine 80 is vertically inverted and placed on a base 81 unlike in the first and second embodiments. The cylinder device 6 and the striking metal 17 that push the first draw bar 8 are arranged below the base 81. The motor device 15, the pulleys 12 and 13, and the belt 14 are accommodated in the base 81. A vibration sensor 82 that detects vibration of the spindle device 2 is arranged on the base 81. A rotary encoder 83 is arranged on the output shaft 15a of the motor device 15, and detects a rotational position of the spindle device 2. A first measuring device 84 that measures the balance of the chuck holder 51 mounted on the spindle device 2 is attached. A second measuring device 85 that measures the balance of a product is attached to an upper position of the first measuring device 84.

The balancing machine 80 configured as described above operates and calculates a position at which an unbalanced state is caused (not illustrated) by a computer device based on information of the vibration sensor 82 and the rotary encoder 83. Then, the chuck holder 51 is balanced by cutting (or conversely, loading a weight to) the position. When the spindle device 2 is used at this time, the chuck holder 51 is easily mounted and removed, and rotation unevenness of the spindle device 2 rarely occurs, and this is preferable as the balancing machine 80.

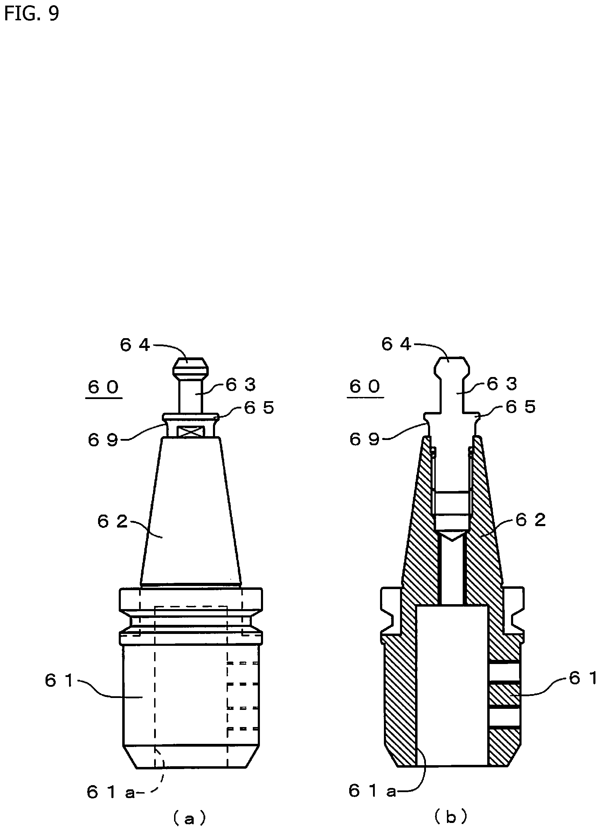

The above-described embodiments are merely described as detailed embodiments for illustrating the principles and concepts of the present invention. That is, the present invention is not limited to the embodiments described above. The present invention can be embodied as an embodiment modified, for example, as follows.
- In the above embodiments, an example in which the chuck holder 51 having a chuck function is an object to be clamped has been described, but another holder may be mounted on the spindle device 2. For example, a tool holder 60 as illustrated in FIGS. 9(a) and 9(b) may be used. The tool holder 60 includes a holder main body 61 and a mounting part 62. A base part of a tool (not illustrated) is fixed to a mounting hole 61a in the holder main body 61. A stud 63 is formed to protrude from a rear end of the mounting part 62. The stud 63 does not advance or retreat. A bulging part 64 having a substantially elliptical shape protruding outward as an engagement part is integrally formed at a leading end of the stud 63. A flange part 65 as an engagement part protruding outward in a disc shape is integrally formed at a leading end of the mounting part 62. A constricted part 69 as an engagement part is formed between the mounting part 62 adjacent to the flange part 65 and the flange part 65. In this tool holder 60, the mounting part 62 and the stud 63 are configured to have the same shapes as those of the mounting part 53 of the chuck holder 51 and the pull stud 55 not advancing.

Since this tool holder 60 can also be mounted on the spindle device 2 at two clamped positions as described above, the tool holder 60 can be firmly mounted on the spindle device 2 at the inside and the outside and at the front and rear sides.
- The cylinder devices 6 and 73 may be either hydraulic cylinder devices or pneumatic cylinder devices.
- Other spring devices may be used as means and devices to bias the first and second draw bars 8 and **9.** In addition, a cylinder device may be used as the biasing device.
- A multiphase AC, for example, a six-phase AC servomotor is preferably used as the motor device 15, but other motors or DC motor devices instead of AC motor devices may be used.
- In the above description, the first and second balls 32 and 34 are used as an example of the interference body that advances and retreats in a radial direction of the clamping mechanism, but besides these, a clamping mechanism including a collet or a split claw arranged to advance and retreat so as to swing in the radial direction may also be used.

The present invention is not limited to the configurations described in the embodiments described above. Components of the above-described embodiments and modifications may be arbitrarily selected and combined to make a configuration. Arbitrary components of the embodiments and modifications and arbitrary components described in "Solution to Problem" or components embodying arbitrary components described in "Solution to Problem" may be arbitrarily combined to make a configuration. The applicant also has an intention to acquire rights to these in the amendment or divisional application, etc., of the present application.

In addition, the applicant has an intention to acquire rights for the whole design or a partial design by applying for a change to a design application. Although the drawings illustrate the whole of the apparatus of the present invention with solid lines, the drawings include not only the whole design but also a partial design claimed for a part of the apparatus. For example, the drawings include not only a part of members of the apparatus as a partial design, but also a part of the apparatus as a partial design regardless of the members. A part of the apparatus may be a part of the members of the apparatus or a part of the member.

### Reference Signs List

2... spindle device, 6... cylinder device as pushing means, 8... first draw bar, 9... second draw bar, 10... disc spring assembly as first biasing means, 11... disc spring assembly as second biasing means, 51... chuck holder as holder, 60... tool holder as holder, 56... bulging part as first clamped part, 58... constricted part as second clamped part, 73 ... cylinder device as pushing means

## Claims

1. A spindle device to be used by mounting a holder for a tool or a workpiece on a spindle leading end, where the holder has a first clamped part and a second clamped part arranged doubly at the inside and the outside on a base part side of the holder, the spindle device comprising:
a first draw bar having a first clamping mechanism for clamping the first clamped part of the holder on a front end side; and a second draw bar having a second clamping mechanism for clamping the second clamped part of the holder on the front end side, wherein the first draw bar and the second draw bar are arranged in series in the spindle cylinder and are arranged to be capable of advancing and retreating,
the first draw bar is advanced against a biasing force of a first biasing means by being pressed in an advancing direction by a pushing means, the second draw bar is advanced against a biasing force of a second biasing means by being directly or indirectly pushed by the first draw bar along with the advance of the first draw bar, and
when the first draw bar advanced by the pushing means is at a predetermined advanced position, the first clamping mechanism is released, the second clamping mechanism of the second draw bar pushed by the first draw bar is also released, and
the first draw bar at the predetermined advanced position and the second draw bar are respectively retreated toward the spindle cylinder base part by the biasing forces of the first biasing means and the second biasing means along with the release of the pressing force of the pushing means, resulting in activation of the first clamping mechanism of the first draw bar and the second clamping mechanism of the second draw bar.

2. The spindle device according to claim 1, wherein the pushing means retracts to a position not in contact with the first draw bar when not pressing the first draw bar.

3. The spindle device according to claim 1 or 2, wherein a biasing force obtained when the second biasing means is biased is greater than a biasing force obtained when the first biasing means is biased.

4. The spindle device according to claim 1 or 2, wherein, when the first draw bar retreats from the predetermined advanced position, the first clamping mechanism of the first draw bar is activated after the second clamping mechanism of the second draw bar is activated.

5. The spindle device according to claim 1 or 2, wherein the first draw bar includes an outer circumferential surface in contact with an inner circumferential surface of the second draw bar, and slides back and forth by being guided by the inner circumferential surface and the outer circumferential surface.

6. The spindle device according to claim 1 or 2, wherein the first clamping mechanism and the second clamping mechanism are arranged at positions shifted from each other in a front-rear direction.

7. The spindle device according to claim 1 or 2, wherein the first clamping mechanism includes an interference body that advances and retreats in a radial direction of the spindle, and in a state where the first draw bar is arranged at the first advanced position, by arranging the interference body that clamps the first clamped part at a position facing an accommodating part formed on the inner circumferential surface of the second draw bar, the first clamping mechanism is released.

8. The spindle device according to claim 8, wherein the second clamping mechanism includes an interference body that advances and retreats in the radial direction of the spindle, and in a state where the first draw bar is arranged at the first advanced position, by arranging the interference body that clamps the second clamped part at a position facing an accommodating part formed on an inner circumferential surface of the spindle cylinder, the second clamping mechanism is released.

9. The spindle device according to claim 1 or 2, wherein the holder is mounted in a holder mounting hole formed at a leading end of the spindle cylinder.

10. The spindle device according to claim 1 or 2, wherein the holder for a workpiece has a structure in which the first clamped part is formed on a lever member capable of advancing and retreating, and in a state where the second clamping mechanism is activated, the lever member is pulled out via the first clamped part and the workpiece in an unclamped state is clamped on the holder mounted on the spindle leading end, and the first draw bar advances to push back the lever member and the workpiece in a clamped state is unclamped.

11. The spindle device according to claim 1 or 2, wherein the first biasing means and the second biasing means are compression spring devices, and bias the first draw bar and the second draw bar in a retreating direction.

12. A machine tool comprising the spindle device according to claim 1 or 2 mounted thereon.

13. A balancing machine comprising the spindle device according to claim 1 or 2 mounted thereon.
